# EUROPÄISCHE PATENTSCHRIFT

(11) **EP 1 030 979 B1**
(45) Veröffentlichungstag und Bekanntmachung des Hinweises auf die Patenterteilung: **16.10.2002**
(21) Anmeldenummer: 98944994.7
(22) Anmeldetag: 16.07.1998
(51) Int. Cl.: F16D 65/16

(54) **ELEKTROMECHANISCHE RADBREMSVORRICHTUNG**
WHEEL ELECTRO-MECHANICAL BRAKE SYSTEM
SYSTEME DE FREIN SUR ROUE A COMMANDE ELECTROMECANIQUE

(30) Priorität: 13.11.1997 DE 19750272; 27.05.1998 DE 19823568
(43) Veröffentlichungstag der Anmeldung: 30.08.2000
(73) Patentinhaber: ROBERT BOSCH GMBH, 70442 Stuttgart (DE)
(72) Erfinder: SCHAFFER, Wolfram, D-71282 Hemmingen (DE)
(86) Internationale Anmeldenummer: DE9801989
(87) Internationale Veröffentlichungsnummer: WO99025987

(56) Entgegenhaltungen:
- EP-A- 0 275 783
- WO-A-96/03301
- DE-A- 19 611 910
- PATENT ABSTRACTS OF JAPAN vol. 95, no. 2, 31. März 1995 & JP 06 327190 A (NISSAN MOTOR), 25. November 1994

## Beschreibung

### Stand der Technik

Die Erfindung betrifft eine elektromechanische Radbremsvorrichtung für ein Kraftfahrzeug mit den Merkmalen des Oberbegriffs des Anspruchs 1.

Eine gattungsbildende elektromechanische Radbremsvorrichtung ist aus EP-A-0 275 783 bekannt. Die Radbremsvorrichtung hat eine axial unverschiebliche Gewindespindel, welche mittels einer schaltbaren Elektromagnetkupplung mit einem ersten Zahnrad verbindbar ist. Eine auf der Gewindespindel drehbare und axial verschiebliche Spindelmutter trägt ein zweites Zahnrad, das axialkraftabhängig mit der Spindelmutter kuppelbar ist. Die beiden Zahnräder bilden zusammen mit einem von einem Elektromotor 30 antreibbaren dritten Zahnrad, in das die beiden anderen Zahnräder eingreifen, einen Differentialantrieb. Die Spindelmutter trägt einen längsverschiebbaren Kolben zum Andrücken eines Reibbremsbelags an einen Bremskörper.

Bei einem Bremsvorgang werden der Elektromotor und die Elektromagnetkupplung bestromt. Die rotierend angetriebene Gewindespindel verschiebt die zunächst nicht angetriebene Spindelmutter zur schnellen Überwindung des Lüftspiels zwischen Reibbremsbelag und Bremskörper. Mit dem Aufbau einer das Zahnrad mit der Spindelmutter kuppelnden Axialkraft aufgrund des Angriffs des Reibbremsbelags an dem Bremskörper wird auch die Spindelmutter rotierend angetrieben und der Differentialantrieb wirksam. Der Aufbau der am Bremskörper wirkenden Bremskraft erfolgt nun mit erheblich reduzierter Vorschubgeschwindigkeit der Spindelmutter.

Zum Lösen der Radbremsvorrichtung wird die Elektromagnetkupplung abgeschaltet, während der Elektromotor bestromt wird. Die elektromotorisch antriebslose, selbsthemmungsfrei ausgebildete Gewindespindel wird nun von der Reaktionskraft der Radbremsvorrichtung in Gegendrehrichtung angetrieben, was eine axiale Rückstellung der zunächst weiterhin elektromotorisch angetriebenen Spindelmutter zur Folge hat. Mit der Einstellung des Lüftspiels wird auch die Spindelmutter antriebslos und der Elektromotor abgeschaltet.

Die bekannte Radbremsvorrichtung ist konstruktiv relativ aufwendig, in erheblichem Maß in ihrem Getriebe reibungsbehaftet und erfordert im Normalbetrieb ein häufiges Schalten der Elektromagnetkupplung. Das Rückstellen der Radbremsvorrichtung und das Einstellen des Lüftspiels erfolgt weitgehend ungesteuert.

Bei einer aus JP-Abstract 06 327190 A bekannten elektromechanischen Radbremsvorrichtung ist eine sowohl drehbare als auch axial verschiebliche Gewindespindel vorgesehen, mit der ein Reibbremsbelag elektromotorisch gegen einen Bremskörper andrück- und von diesem lösbar ist. Außerdem weist die bekannte Radbremsvorrichtung eine drehrichtungsabhängige Kupplung (Freilaufkupplung) auf, mit der die Gewindespindel während der Bremsbetätigung unverdrehbar festgehalten ist. Lediglich wenn die Bremskraft beim elektromotorischen Lösen der Bremse aufgehoben wird, gibt die Freilaufkupplung die Gewindespindel zur selbsttätigen ungesteuerten Einstellung eines Lüftspiels frei. Der Veröffentlichung ist nicht'zu entnehmen, wie die Radbremsvorrichtung bei ausgefallenem Elektromotor gelöst werden soll, noch ist die Betätigungsweise der Freilaufkupplung offenbart.

Eine elektromechanische Radbremsvorrichtung ist außerdem aus WO 96/03301 bekannt. Diese Radbremsvorrichtung ist als, Scheibenbremse ausgebildet. Sie weist einen als Schwimmsattel gestalteten Bremssattel auf, in dem zwei Reibbremsbeläge beiderseits einer zwischen ihnen in Rotation versetzbaren Bremsscheibe als Bremskörper angeordnet sind. Zum Andrücken eines der beiden Reibbremsbeläge an die eine Seite der Bremsscheibe weist die bekannte Radbremsvorrichtung einen Spindeltrieb auf, dessen Gewindemutter von einem Elektromotor rotierend antreibbar ist und dessen Gewindespindel gegen den einen Reibbremsbelag drückbar ist. Der andere Reibbremsbelag wird in an sich bekannter Weise durch beim Andrücken des einen Reibbremsbelags auftretende Reaktionskräfte, die der Schwimmsattel auf den anderen Reibbremsbelag überträgt, gegen die andere Seite der Bremsscheibe gedrückt.

Zur Rückstellung der bekannten Radbremsvorrichtung im Fehlerfall, d. h. bei Ausfall einer Steuerelektronik oder bei Ausfall des Elektromotors oder seiner Stromversorgung, weist die bekannte Radbremsvorrichtung eine Rückstellfeder in Form einer Spiralfeder auf, die sich mit ihrem einen Ende am Bremssattel abstützt und die mit ihrem anderen Ende an der Gewindespindel angreift. Diese Spiralfeder wird beim Betätigen der Radbremsvorrichtung gespannt und löst die Radbremsvorrichtung nach Beendigung einer Bremsung durch Rückdrehen der Gewindespindel.

Die bekannte Radbremsvorrichtung hat den Nachteil, daß ihre Rückstellfeder bei jeder Bremsbetätigung gespannt wird, wozu Energie erforderlich ist, wodurch der Wirkungsgrad der bekannten Radbremsvorrichtung verringert ist. Hinzu kommt, daß die Federkraft der Rückstellfeder beim Betätigen der Radbremsvorrichtung zusätzlich von ihrem Elektromotor aufgegebracht und während der Bremsung gehalten werden muß, der Elektromotor muß dementsprechend stärker ausgelegt sein. Weiterer Nachteil ist, daß die Rückstellfeder die Radbremsvorrichtung stets bis in ihre voll zurückgestellte Ausgangsstellung zurückbewegt, so daß ein Lüftspiel zwischen den Reibbremsbelägen und der Bremsscheibe mit zunehmender Abnutzung der Reibbremsbeläge größer wird. Dadurch vergrößert sich ein Zustellweg und verlängert sich eine Zustellzeit bis die Reibbremsbeläge in Anlage an die Bremsscheibe gelangen. Ebenso vergrößert sich diel Federkraft der Rückstellfeder, die zum Bremsen überwunden werden muß mit zunehmender Abnutzung der Reibbremsbeläge, was den Wirkungsgrad der Radbremsvorrichtung weiter verschlechtert und einen ausreichend starken und standfesten Elektromotor erforderlich macht.

### Vorteile der Erfindung

Die erfindungsgemäße, elektromechanische Radbremsvorrichtung mit den Merkmalen des Anspruchs 1 weist einen selbsthemmungsfreien Spindeltrieb auf, dessen Gewindespindel sich durch Druck in axialer Richtung auf die Gewindespindel in Drehung gegenüber der Spindelmutter versetzen und dadurch axial verschieben läßt. Desweiteren sind erfindungsgemäß sowohl die Spindelmutter als auch die Gewindespindel drehbar gelagert, so daß eine Andruckkraft der Reibbremsbeläge an den Bremskörper beim Bremsen, die eine Kraft in axialer Richtung auf die Gewindespindel ausübt, diese in Rotation in der Spindelmutter versetzt und dadurch eine Rückstellung der erfindungsgemäßen Radbremsvorrichtung bewirkt, bis die Reibbremsbeläge mit geringer, eine Restbremskraft bewirkender Andruckkraft am Bremskörper anliegen, die eine nahezu freie Drehbarkeit des Bremskörpers zuläßt. Dadurch ist das Lösen der Radbremsvorrichtung bis auf eine akzeptable Restbremskraft im Fehlerfall sichergestellt.

Zur Betätigung der Radbremsvorrichtung weist diese erfindungsgemäß eine lösbare Drehsicherungseinrichtung auf, die eine Rotation der Gewindespindel unterbindet und deren translatorische Verschiebung in axialer Richtung durch rotierenden Antrieb der Spindelmutter ermöglicht. Gelöst wird die Radbremsvorrichtung durch rotierenden Antrieb der Spindelmutter in entgegengesetzter Richtung, so daß ein Lüftspiel zwischen Reibbremsbelag und Bremskörper elektromotorisch einstellbar ist. Ein Lösen der Drehsicherungseinrichtung der Gewindespindel ist nur für den Fehlerfall vorgesehen. Die Gewindespindel ist vorzugsweise über eine formschlüssige Verbindung drehfest und axial verschieblich mit der lösbaren Drehsicherungseinrichtung verbunden, d. h. die Gewindespindel verschiebt sich beim Andrücken und Lösen des Reibbremsbelags in axialer Richtung, wogegen die Drehsicherungseinrichtung ruht, d. h. sie macht die Verschiebebewegung der Gewindespindel nicht mit.

Die erfindungsgemäße Radbremsvorrichtung hat den Vorteil, daß ihre Drehsicherungseinrichtung, die ein Lösen der Radbremsvorrichtung im Fehlerfall ohne den Elektromotor ermöglicht, den Wirkungsgrad und die Funktion der Radbremsvorrichtung nicht beeinflußt. Weiterer Vorteil ist, daß das Lüftspiel zwischen Reibbremsbelag und Bremskörper mit dem Elektromotor unabhängig von einer Abnutzung des Reibbremsbelags stets auf den gleichen Wert einstellbar ist, so daß sich Zustellweg und Zustellzeit nicht verlängern.

Da sich die Drehsicherungseinrichtung der erfindungsgemäßen Radbremsvorrichtung nicht mit der Gewindespindel verschiebt, muß kein Freiraum für eine Verschiebung der Drehsicherungseinrichtung bei Betätigung der Radbremsvorrichtung vorgesehen werden. Dies spart erheblich Bauraum, da bei einer mit der Gewindespindel mitbewegten Drehsicherungseinrichtung ein der Dicke beider Reibbremsbeläge zuzüglich des Lüftspiels entsprechender Freiraum für die Drehsicherungseinrichtung vorgesehen werden müßte. Ein Bremssattel der erfindungsgemäßen Radbremsvorrichtung läßt sich auf diese Weise in axialer Richtung um cirka 20 bis 30 mm kürzer bauend ausbilden, was einen erheblichen Vorteil darstellt, da die Radbremsvorrichtung üblicherweise im Inneren einer Felge eines Fahrzeugrades mit eng begrenzten Platzverhältnissen untergebracht werden muß. Weiterer Vorteil der axial nicht mit der Gewindespindel mitbewegten Drehsicherungseinrichtung ist eine verringerte Reibung bei Betätigung und Lösen der erfindungsgemäßen Radbremsvorrichtung, die zu einer verbesserten Dynamik beim Betätigen und Lösen der Radbremsvorrichtung führt. Insbesondere im Fehlerfall löst sich die erfindungsgemäße Radbremsvorrichtung innerhalb kürzester Zeit. Weiterer Vorteil der verringerten Reibung beim Lösen der erfindungsgemäßen Radbremsvorrichtung ist, daß die Restbremskraft näherungsweise null ist. Hinzu kommt, daß das Risiko eines Verkantens oder Verklemmens beispielsweise infolge Verschmutzung durch die nicht mit der Gewindespindel mitbewegte Drehsicherungseinrichtung gering ist.

Die Unteransprüche haben vorteilhafte Ausgestaltungen und Weiterbildungen der im Hauptanspruch angegebene Radbremsvorrichtung zum Gegenstand.

### Zeichnung

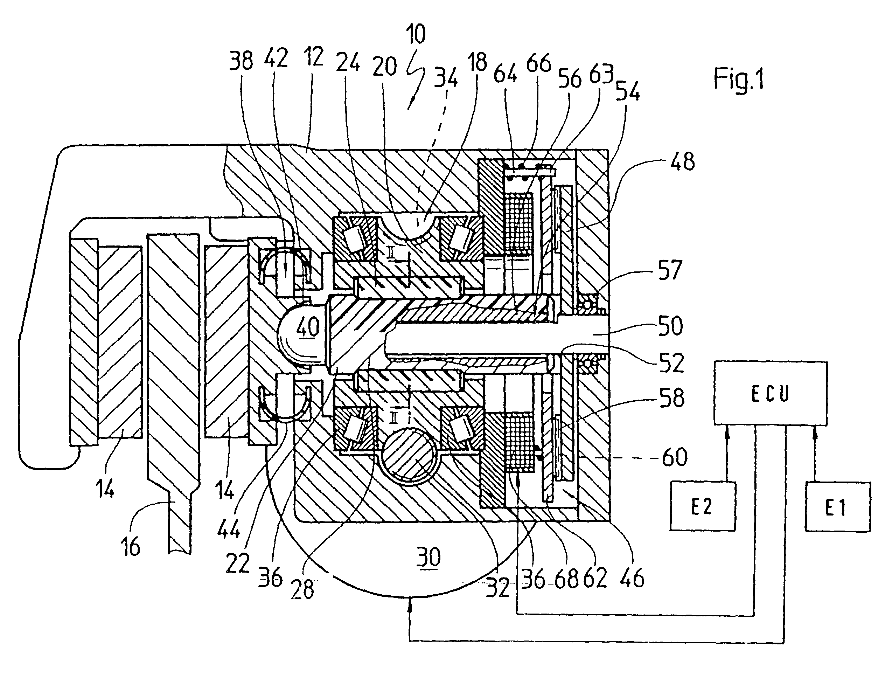

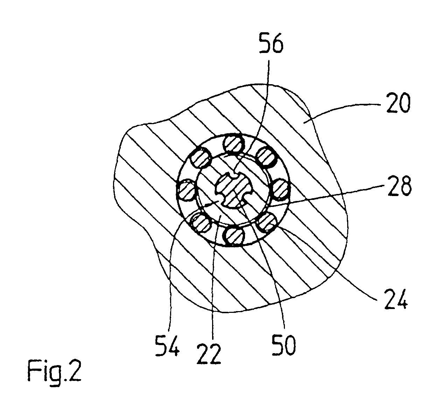

Die Erfindung wird nachfolgend anhand eines in der Zeichnung dargestellten Ausführungsbeispiels näher erläutert. Es zeigen Figur 1 eine erfindungsgemäße Radbremsvorrichtung im Achsschnitt, und Figur 2 einen Schnitt entlang Linie II-II in Figur 1.

### Beschreibung des Ausführungsbeispiels

Die in der Zeichnung dargestellte, erfindungsgemäße, elektromechanische Radbremsvorrichtung 10 ist als Scheibenbremse ausgebildet. Sie weist einen Schwimmsattel 12 auf, in dem ein Paar Reibbremsbeläge 14 beiderseits einer zwischen ihnen in Rotation versetzbaren Bremsscheibe 16 angebracht sind.

Zum Andrücken eines der beiden Reibbremsbeläge 14 an die Bremsscheibe 16 weist die erfindungsgemäße Radbremsvorrichtung 10 einen in ihren Schwimmsattel 12 eingebauten Spindeltrieb 18 auf. Wegen der Reibungsarmut und eines hohen Wirkungsgrades ist der Spindeltrieb 18 als Wälzgewindetrieb in Form eines Rollengewindetriebs ausgebildet. Er weist eine in einer Spindelmutter 20 koaxial einliegende Gewindespindel 22 und acht Gewinderollen 24 auf, die in einem Zwischenraum zwischen Spindelmutter 20 und Gewindespindel 22 angeordnet sind (siehe Figur 2). Die Gewinderollen 24 stehen mit einem Spindelgewinde 28 der Gewindespindel 22 in Eingriff. Durch rotierenden Antrieb der Spindelmutter 20 werden die Gewinderollen 24 zu einer umlaufenden Bewegung um die Gewindespindel 22 herum wie Planetenräder eines Planetengetriebes angetrieben. Während ihrer Umlaufbewegung rollen die Gewinderollen 24 auf dem Spindelgewinde 28 ab, sie führen während der Umlaufbewegung um die Gewindespindel 22 herum eine Rotationsbewegung um ihre eigene Achse aus. Über die umlaufenden Gewinderollen 24 bewirkt ein rotierender Antrieb der Spindelmutter 20 eine translatorische Bewegung der Gewindespindel 22 in axialer Richtung.

Zum rotierenden Antrieb der Spindelmutter 20 weist die erfindungsgemäße Radbremsvorrichtung 10 einen Elektromotor 30 mit einer Schnecke 32 auf, die mit einer umlaufenden Verzahnung 34 der Spindelmutter 20 kämmt. Anstelle des Schneckengetriebes 32, 34 kann beispielsweise auch ein Spiralkegelgetriebe vorgesehen werden (nicht dargestellt). Der Elektromotor 30 ist als elektronisch kommutierbarer Motor ausgebildet.

Die Spindelmutter 20 ist mit einem Paar Axial-Schrägrollenlagern 36 drehbar im Schwimmsattel 12 gelagert und stützt sich über die Schrägrollenlager 36 axial am Schwimmsattel 12 ab.

An einem der Bremsscheibe 16 zugewandten Stirnende der Gewindespindel 22 ist einer der Reibbremsbeläge 14 angeordnet. Eine Drehlagerung 38 zwischen der Gewindespindel 22 und dem Reibbremsbelag 14, die Druckkräfte in axialer Richtung von der Gewindespindel 22 auf den Bremsbelag 14 und in umgekehrter Richtung überträgt, ermöglicht eine Drehung der Gewindespindel 22 gegenüber dem drehfesten Reibbremsbelag 14. Die Drehlagerung weist eine mit der Gewindespindel 22 einstückige Kalotte 40 auf, die in einer Halbkugelpfanne 42 größeren Durchmessers des Reibbremsbelags 14 einliegt. Die Kalotte 40 bildet einen Lagerkopf, die Halbkugelpfanne 42 eine Lagerpfanne der Drehlagerung 38. Diese Drehlagerung 38 ist einfach in ihrem Aufbau und daher preiswert herstellbar. Da nur im Fehlerfall, nicht aber beim vorgesehenen Betätigen und Lösen der erfindungsgemäßen Radbremsvorrichtung 10, eine Relativbewegung zwischen Gewindespindel 22 und Reibbremsbelag 14 stattfindet, ist eine Gleitlagerung als Drehlagerung 38 ausreichend, auf eine aufwendigere Wälzlagerung kann verzichtet werden. Die Drehlagerung 38 mit der Kalotte 40 und der Halbkugelpfanne 42 hat den Vorteil, daß sie in axialer Richtung hohen Belastungen standhält und eine geringe Reibung bei einer Drehbewegung zwischen Gewindespindel 22 und Reibbremsbelag 14 aufweist. Es können auch ein von der Kugelform abweichender Lagerkopf 40 und eine von der Kugelform abweichende Lagerpfanne 42 Verwendung finden, beispielweise Paraboloid- oder Elipsenformen.

Zwischen dem an der Gewindespindel 22 angebrachten Reibbremsbelag 14 und .dem Schwimmsattel 12 ist eine Dichtmanschette 44 angebracht, die die Gewindespindel 22 im Bereich ihrer Kalotte 40 und die Halbkugelpfanne 42 des Reibbremsbelags 14 umschließt und den Spindeltrieb 18-und den Schwimmsattel 12 vor Eindringen von Feuchtigkeit und Schmutz von der Bremsscheibenseite her schützt. Die Dichtmanschette 44 ist kreisringförmig ausgebildet, ihr Ringquerschnitt ist halbkreisbogenförmig. Anstelle der dargestellten Dichtmanschette 44 kann beispielsweise auch eine nicht dargestellte, die Form eines Faltenbalgs aufweisende Dichtmanschette eingesetzt werden. Die Dichtmanschette 44 hat neben ihrer Dichtfunktion die Aufgabe, den Reibbremsbelag 14 in axialer Richtung in Anlage an der Gewindespindel 22 zu halten.

Der Spindeltrieb 18 der erfindungsgemäßen Radbremsvorrichtung 10 ist selbsthemmungsfrei ausgebildet, d.h. durch Druck in axialer Richtung auf die Gewindespindel 22 läßt sich diese in Rotation versetzten und bewegt sich dabei translatorisch in axialer Richtung, sie "schraubt" sich aus der Spindelmutter 20 heraus. Zur Sicherung gegen Drehung der Spindelmutter 22 weist die Radbremsvorrichtung 10 eine lösbare Drehsicherungseinrichtung 46 auf einer der Bremsscheibe 16 abgewandten Seite des Spindeltriebs 18 auf: Auf einer der Bremsscheibe 16 abgewandten Seite des Spindeltriebs 18 ist eine Kupplungsscheibe 48 vorgesehen, die in einer Radialebene zur Gewindespindel 22 angeordnet ist. Die Kupplungsscheibe 48 ist über einen Formschluß drehfest mit der Gewindespindel 22 verbunden: Die Kupplungsscheibe 48 ist mit einem Profilzapfen 50 durch eine Schweißung 52 verbunden, der koaxial in der Gewindespindel 22, die zu diesem Zweck als Hohlspindel ausgebildet ist, einliegt. Der Profilzapfen 50 ist im wesentlichen zylindrisch ausgebildet, er ist in dem Bereich, in dem er in die Gewindespindel 22 einliegt, mit drei Längsnuten 54 versehen, die äquidistant an seinem Umfang angeordnet sind (Figur 2). Die Längsnuten 54 weisen einen halbrunden Nutgrund auf. Die als Hohlwelle ausgebildete Gewindespindel 22 weist drei in Längsrichtung verlaufende, mit ihr einstückige Federn 56 auf, die in die Längsnuten 54 des Profilzapfens 50 eingreifen und die Gewindespindel 22 durch Formschluß drehfest mit dem Profilzapfen 50 und damit mit der Kupplungsscheibe 48 verbinden und eine Axialverschiebung der Gewindespindel 22 auf dem Profilzapfen 50 zulassen. Der Profilzapfen 50 ist mit einem Kugellager 57 auf einer dem Spindeltrieb 18 abgewandten Seite der Kupplungsscheibe 48 drehbar im Schwimmsattel 12 gelagert.

Der Profilzapfen 50 kann anstelle des dargestellten Profils auch andere Querschnittsform, wie beispielsweise ein Poligonprofil, eine Längsverzahnung oder eine sonstige, von der Kreisform abweichende Querschnittsform aufweisen, die einen Formschluß in Umfangsrichtung gewährleistet, wobei die als Hohlwelle ausgebildete Gewindespindel 22 ein komplementäres Innenprofil aufweist, so daß die Gewindespindel 22 durch Formschluß drehfest auf dem Profilzapfen 50 gehalten und in axialer Richtung verschiebbar ist. Auch ist beispielsweise eine Keilverbindung mit einem in eine Längsnut des Profilzapfens 50 eingesetzten Keil, der in eine Längsnut der Gewindespindel 22 eingreift, möglich (nicht dargestellt).

Die Kupplungsscheibe 48 weist eine Verzahnung 58 auf einer dem Spindeltrieb 18 zugewandten Stirnseite auf, mit der sie mit einer komplementären Verzahnung 60 einer Ankerscheibe 62 in Eingriff steht. Die Ankerscheibe 62 ist drehfest und ein kurzes Stück in Richtung des Spindeltriebs 18 verschieblich am Schwimmsattel 12 angebracht. Dazu ist die Ankerscheibe 62 mit drei um 120 Grad zueinander versetzt angeordneten Bohrungen 63 nahe ihres Umfangs versehen, mit denen sie auf drei Stehbolzen 64 verschiebbar aufgesetzt ist, die fluchtend mit den Bohrungen 63 der Ankerscheibe 62 achsparallel zum Spindeltrieb 18 fest in den Schwimmsattel 12 eingesetzt sind. Auf die Stehbolzen 64 sind Schraubendruckfedern als Kupplungseinrückfedern 66 aufgesetzt, die die Ankerscheibe 62 gegen die Kupplungsscheibe 48 drücken und dadurch die Verzahnungen 58, 60 der Kupplungsscheibe 48 und der Ankerscheibe 62 miteinander in Eingriff halten. Über die Verzahnungen 58, 60 ist die Kupplungsscheibe 48 drehfest mit der Ankerscheibe 62 verbunden, d. h. der mit der Kupplungsscheibe 48 drehfeste Profilzapfen und die mit dem Profilzapfen 50 drehfeste Gewindespindel 22 sind verdrehfest im Schwimmsattel 12 aufgenommen. Bei rotierendem Antrieb der Gewindespindel 20 verschiebt sich die im Schwimmsattel 12 gegen Verdrehen gesicherte Gewindespindel 22 ausschließlich axial, sie rotiert nicht.

Zum Lösen der Drehsicherungseinrichtung 46 weist diese einen ringförmigen Elektromagneten 68 auf, der in Figur 1 als Wicklung dargestellt ist. Der Elektromagnet 68 ist zwischen der Ankerscheibe 62 und dem Spindeltrieb 18 am Schwimmsattel 12 angebracht. Bei Bestromung zieht der Elektromagnet 68 die Ankerscheibe 62 gegen die Kraft der Kupplungseinrückfedern 66 an, wodurch sich die Ankerscheibe 62 in axialer Richtung soweit von der Kupplungsscheibe 48 entfernt, daß die Verzahnungen 58, 60 von Kupplungsscheibe 48 und Ankerscheibe 62 außer Eingriff gelangen. Dadurch ist die Drehsicherung der Kupplungsscheibe 48 und mit ihr zusammen des Profilzapfens 50 und der Gewindespindel 22 aufgehoben. Die Drehsicherungseinrichtung 46 mit der Kupplungsscheibe 48 und der Ankerscheibe 62 mit ihren beiden Verzahnungen 58, 60, den Stehbolzen 64, den Kupplungseinrückfedern 66 und dem Elektromagneten 68 ist als formschlüssige, lösbare Kupplung ausgebildet, die stromlos eingerückt ist und dadurch die Gewindespindel 22 über den Profilzapfen 50 gegen Verdrehen im Schwimmsattel 12 sichert und die durch Bestromen des Elektromagneten 68 lös- oder ausrückbar ist, wodurch die Drehsicherung der Gewindespindel 22 aufgehoben ist.

Die Funktion der erfindungsgemäßen Radbremsvorrichtung 10 ist folgende: Zum Betätigen wird die Spindelmutter 20 mit dem Elektromotor 30 rotierend in einer Betätigungsdrehrichtung angetrieben, so daß die Gewindespindel 22 translatorisch axial in Richtung der Bremsscheibe 16 verschoben wird. Dabei verhindert die lösbare Drehsicherungseinrichtung 46 in Form der stromlos eingerückten Kupplung 48, 58, 60, 62, 64, 66, 68 eine Rotation der Gewindespindel 22. Die Gewindespindel 22 drückt den an ihr angeordneten Reibbremsbelag 14 gegen eine Seite der Bremsscheibe 16. Über eine Reaktionskraft wird der zweite Reibbremsbelag 14 über den Schwimmsattel 12 in an sich bekannter Weise an die andere Seite der Bremsscheibe 16 gedrückt. Die Bremsscheibe 16 wird gebremst, wobei eine Bremskraft bzw. ein Bremsmoment dem mit dem Elektromotor 30 aufgebrachten Antriebsmoment proportional ist.

Zum Lösen der Radbremsvorrichtung 10 oder zum Verringern der Bremskraft wird die Spindelmutter 20 mit dem Elektromotor 30 in entgegengesetzter Rückstelldrehrichtung angetrieben, wodurch die Gewindespindel 22 translatorisch von der Bremsscheibe 16 weg bewegt wird. Der an ihr angeordnete Reibbremsbelag 14 wird über die Dichtmanschette 44 von der Bremsscheibe 16 abgehoben. Die Gewindespindel 22 wird soweit rückgestellt, daß ein unabhängig von einer Abnutzung der Reibbremsbeläge 14 gleichbleibender Spalt zwischen den Reibbremsbelägen 14 und der Bremsscheibe 16 bei nicht betätigter Radbremsvorrichtung 10 besteht, das sog. "Lüftspiel" der erfindungsgemäßen Radbremsvorrichtung 10 bleibt konstant.

Im Fehlerfall, d.h. bei Ausfall einer Steuerelektronik für die erfindungsgemäße Radbremsvorrichtung 10, bei Ausfall ihres Elektromotors 30 oder dessen Stromversorgung, wird die Drehsicherungseinrichtung 46 gelöst, d. h. die Kupplung 48, 58, 60, 62, 64, 66, 68 wird durch Bestromen ihres Elektromagneten 68 ausgerückt. Die Gewindespindel 22 ist dadurch frei drehbar, sie wird von dem an die Bremsscheibe 16 angedrückten Reibbremsbelag 14 in axialer Richtung von der Bremsscheibe 16 weggedrückt, wodurch sie, da der Spindeltrieb 18 selbsthemmungsfrei ist, in Rotation versetzt wird und sich translatorisch von der Bremsscheibe 16 entfernt. Die Radbremsvorrichtung 10 wird dadurch gelöst bis die Andruckkraft der Reibbremsbeläge 14 an die Bremsscheibe 16 so gering ist, daß sich die Gewindespindel 22 aufgrund innerer Reibung des Rollengewindetriebs 18 nicht weiter bewegt. Die Reibbremsbeläge 14 liegen mit vernachlässigbar geringer Restkraft an der Bremsscheibe 16 an, es wirkt eine akzeptable Restbremskraft der Radbremsvorrichtung 10 auf die Bremsscheibe 16. Diese Restbremskraft ist so gering, daß die Bremsscheibe 16 nahezu frei drehbar ist und ein mit der Radbremsvorrichtung 10 ausgerüstetes Kraftfahrzeug gefahren werden kann, ohne daß es zu einer Überhitzung der Radbremsvorrichtung 10 kommt.

Das Lösen der Radbremsvorrichtung 10 bei ausgefallener Stromversorgung des Elektromotors 30 oder bei dessen Ausfall ist deshalb möglich, weil der Elektromotor 30 und die von der Elektromagnetkupplung 48, 58, 60, 62, 64, 66, 68 gebildete Drehsicherungseinrichtung 46 an voneinander unabhängige Energieversorgungskreise E1 und E2 angeschlossen sind (Figur 1). Die beiden Energieversorgungskreise E1 und E2 sind mit einer elektronischen Steuereinrichtung ECU der Radbremsvorrichtung 10 verbunden. Diese bestromt in Abhängigkeit von einem Bremsanforderungssignal den Elektromotor 30 aus dem Energieversorgungskreise E1. Erkennt die Steuereinrichtung ECU aufgrund der Signale nicht dargestellter Sensoren, daß sich die betätigte Radbremsvorrichtung 10 nicht lösen läßt, so bestromt die Steuereinrichtung ECU den Elektromagneten 68 der Drehsicherungseinrichtung 46 aus dem Energieversorgungskreis E2. Die Radbremsvorrichtung 10 wird somit bei intaktem Energieversorgungskreis E2 sicher gelöst.

Bei dem in Figur 1 dargestellten Ausführungsbeispiel ist die elektronische Steuereinrichtung ECU der Radbremsvorrichtung 10 zugeordnet. Da ein Kraftfahrzeug üblicherweise an allen Rädern mit derartigen Radbremsvorrichtungen 10 ausgestattet ist, kann die Steuereinrichtung 10 auch der Steuerung der übrigen Radbremsvorrichtungen des Fahrzeugs dienen. Statt dessen kann aber auch jede Radbremsvorrichtung 10 des Fahrzeugs mit einer Steuereinrichtung ECU ausgestattet sein. In diesem Fall sind alle Steuereinrichtungen ECU des Fahrzeugs an eine übergeordnete zentrale Steuereinrichtung angeschlossen.

Bei einem Fahrzeug wie einem Personenkraftwagen mit mehreren Radbremsvorrichtungen 10 sind diese beispielsweise diagonal oder achsweise aufgeteilten Bremskreisen zugeordnet. An die beiden Energieversorgungskreise E1 und E2 sind bei einer solchen Aufteilung auch die Elektromotoren 30 und die Drehsicherungseinrichtungen 46 der übrigen Radbremsvorrichtungen 10 angeschlossen, beispielsweise bei achsweise aufgeteilten Bremskreisen derart, daß bei den einer Vorderachse zugeordneten Radbremsvorrichtungen 10 deren Elektromotoren 30 an den Energieversorgungskreis E1 und deren Drehsicherungseinrichtungen 46 an den Energieversorgungskreis E2 angeschlossen sind. Der Hinterachse des Fahrzeugs zugeordnete Radbremsvorrichtungen 10 sind dann mit ihren Elektromotoren 30 an den Energieversorgungskreis E2 und mit ihren Drehsicherungseinrichtungen 46 an den Energieversorgungskreis E1 angeschlossen. Wenn der Energieversorgungskreis E2 ausfällt, sind betätigte Radbremsvorrichtungen 10 an der Hinterachse des Fahrzeugs lösbar. Mit den aus dem intakten Energieversorgungskreis E1 versorgten Radbremsvorrichtungen 10 der Vorderachse bleibt das Fahrzeug abbremsbar.

## Patentansprüche

1. Elektromechanische Radbremsvorrichtung (10) für ein Kraftfahrzeug,
mit einem Elektromotor (30),
mit einem selbsthemmungsfrei ausgebildeten Spindeltrieb (18) mit einer vom Elektromotor (30) in beiden Drehrichtungen antreibbaren Spindelmutter (20) und mit einer drehbaren Gewindespindel (22),
mit einer in der Radbremsvorrichtung (10) unverschieblich angeordneten, lösbaren Drehsicherungseinrichtung (46) in Form einer schaltbaren Elektromagnetkupplung, mit der die Gewindespindel (22) verbunden ist,
sowie mit einem Radbremsbelag (14), der mit dem Spindeltrieb (18) an einen drehfest mit einem Fahrzeugrad verbundenen Bremskörper (16) elektromotorisch andrückbar und von dem Bremskörper (16) lösbar ist,
**dadurch gekennzeichnet,**
**daß** die Gewindespindel (22) sowohl drehbar als auch axial verschieblich ist,
**daß** der Reibbremsbelag (14) mit der Gewindespindel (22) des Spindeltriebs (18) an den Bremskörper (16) andrückbar und von dem Bremskörper (16) lösbar ist,
und **daß** die Drehsicherungseinrichtung (46) die Gewindespindel (22) beim elektromotorischen Andrücken und Lösen des Reibbremsbelags (14) unverdrehbar festhält, so daß diese nur axial verschieblich ist, beim im Fehlerfall elektromotorisch nicht möglichen Lösen des Reibbremsbelags (14) dagegen ein Drehen und axiales Verschieben der Gewindespindel (22) zuläßt'.

2. Elektromechanische Radbremsvorrichtung nach Anspruch 1, **dadurch gekennzeichnet, daß** die Gewindespindel (22) eine Hohlspindel ist, die auf einen Zapfen (50) aufgeschoben ist, mit dem sie durch Formschluß (54, 56) drehfest verbunden und axial verschieblich ist, wobei der Zapfen (50) drehfest mit der Drehsicherungseinrichtung(46) ist.

3. Elektromechanische Radbremsvorrichtung nach Anspruch 2, **dadurch gekennzeichnet, daß** der Zapfen ein Profilzapfen (50) ist, und daß die Gewindespindel (22) ein zum Profilzapfen (50) komplementäres Innenprofil (56) aufweist.

4. Elektromechanische Radbremsvorrichtung nach Anspruch 1, **dadurch gekennzeichnet, daß** eine Drehlagerung (38), die zwischen dem den Reibbremsbelag (14) an den Bremskörper (16) andrückenden Teil (22) des Spindeltriebs (18) und dem Reibbremsbelag (14) angeordnet ist, die eine Drehbewegung zwischen dem den Reibbremsbelag (14) an den Bremskörper (16) andrückenden Teil (22) des Spindeltriebs (18) und dem Reibbremsbelag (14) ermöglicht und die eine translatorische Bewegung des den Reibbremsbelag (14) an den Bremskörper (16) andrückenden Teils (22) des Spindeltriebs (18) in Richtung des Reibbremsbelags (14) auf den Reibbremsbelag (14) überträgt.

5. Elektromechanische Radbremsvorrichtung nach Anspruch 4, **dadurch gekennzeichnet, daß** die Drehlagerung (18) einen gerundeten Lagerkopf (40) aufweist, der in einer Lagerpfanne (44) einliegt.

6. Elektromechanische Radbremsvorrichtung nach Anspruch 1, **gekennzeichnet durch** eine Dichtmanschette (44), die auf einer dem Reibbremsbelag (14) zugewandten Seite des Spindeltriebs (18) angeordnet ist, die den Spindeltrieb (18) gegen Nässe und Verschmutzung schützt und die den Reibbremsbelag (14) in Anlage an dem Teil (22) des Spindeltriebs (18) hält, das den Reibbremsbelag (14) gegen den Bremskörper (16) drückt.

7. Elektromechanische Radbremsvorrichtung nach Anspruch 1, **dadurch gekennzeichnet, daß** der Spindeltrieb (18) ein Wälzgewindetrieb, insbesondere ein Rollengewindetrieb ist.

8. Elektromechanische Radbremsvorrichtung nach Anspruch 1, **dadurch gekennzeichnet, daß** der Elektromotor (30) ein elektronisch kommutierbarer Motor ist.

9. Elektromechanische Radbremsvorrichtung nach dem Anspruch 1, mit einem Energieversorgungskreis (E1) für den Elektromotor (30), **dadurch gekennzeichnet, daß** die Elektromagnetkupplung (46) an einen vom Energieversorgungskreis (E1) des Elektromotors (30) unabhängigen Energieversorgungskreis (E2) angeschlossen ist.

## Claims

1. Electromechanical wheel brake device (10) for a motor vehicle, having an electric motor (30), having a non-self-locking spindle drive (18) with a spindle nut (20) which can be driven in both directions of rotation by the electric motor (30) and with a rotatable threaded spindle (22), having a releaseable antirotation device (46) which is non-displaceably arranged in the wheel brake device (10) and is in the form of a switchable electromagnetic clutch to which the threaded spindle (22) is connected, and having a wheel brake lining (14) which can be electromotively pressed, with the spindle drive (18), against a brake element (16) fixed in terms of rotation to a vehicle wheel, and can be released from the brake element (16), **characterized in that** the threaded spindle (22) is both rotatable and axially displaceable, **in that** the friction brake lining (14) can be pressed with the threaded spindle (22) of the spindle drive (18) against the brake element (16) and can be released from the brake element (16), and **in that** the antirotation device (46) captively retains the threaded spindle (22) when the friction brake lining (14) is electromotively pressed and released, with the result that said antirotation device (46) is only axially displaceable, but permits rotation and axial displacement of the threaded spindle (22) when it is not possible to release the friction brake lining (14) electromotively in the event of a fault.

2. Electromechanical wheel brake device according to Claim 1, **characterized in that** the threaded spindle (22) is a hollow spindle which is fitted onto a tappet (50) to which it is connected fixed in terms of rotation by positive locking (54, 56) and is axially displaceable, the tappet (50) being fixed in terms of rotation to the antirotation device (46).

3. Electromechanical wheel brake device according to Claim 2, **characterized in that** the tappet is a profiled tappet (50), and **in that** the threaded spindle (22) has an internal profile (56) which is complementary to the profiled tappet (50).

4. Electromechanical wheel brake device according to Claim 1, **characterized in that** a rotational bearing (38) which is arranged between the part (22) of the spindle drive (18) which presses the friction brake lining (14) against the brake element (16), and the friction brake lining (14), permits a rotary movement between the part (22) of the spindle drive (18) which presses the friction brake lining (14) against the brake element (16) and the friction brake lining (14) and transmits a translatory movement of the part (22) of the spindle drive (18) which presses the friction brake lining (14) against the brake element (16), in the direction of the friction brake lining (14) and onto the friction brake lining (14).

5. Electromechanical wheel brake device according to Claim 4, **characterized in that** the rotary bearing (18) has a rounded bearing head (40) which is engaged in a bearing bushing (44).

6. Electromechanical wheel brake device according to Claim 1, **characterized by** a sealing collar (44) which is arranged on a side of the spindle drive (18) facing the friction brake lining (14) and which protects the spindle drive (18) against moisture and soiling and which holds the friction brake lining (14) in abutment against the part (22) of the spindle drive (18) which presses the friction brake lining (14) against the brake element (16).

7. Electromechanical wheel brake device according to Claim 1, **characterized in that** the spindle drive (18) is a rolling-contact drive, in particular a roller drive.

8. Electromechanical wheel brake device according to Claim 1, **characterized in that** the electric motor (30) is an electronically commutatable motor.

9. Electromechanical wheel brake device according to Claim 1, having a power supply circuit (E1) for the electric motor (30), **characterized in that** the electromagnetic coupling (46) is connected to a power supply circuit (E2) which is independent of the power supply circuit (E1) of the electric motor (30).

## Revendications

1. Dispositif de frein de roue (10) électromécanique pour un véhicule comportant
- un moteur électrique (30),
- un entraînement à broche (18) non autobloquant,
- un écrou à broche (20) qui doit être entraîné dans les deux sens de rotation par le moteur électrique (20) et une broche filetée (22) rotative,
- une installation de blocage en rotation (46) débrayable, montée de manière non coulissante dans le dispositif de frein de roue (10), cette installation de blocage étant réalisée comme embrayage électromagnétique susceptible d'être commuté, auquel est reliée la broche filetée (22),
- ainsi qu'une garniture de frein de roue (14) que l'entraînement à broche (18) peut presser par un moteur électrique, contre un organe de frein (16) relié solidaire en rotation à une roue de véhicule, cette garniture pouvant également se dégager de l'organe de frein (16),
**caractérisé en ce que**
- la broche filetée (22) est mobile à la fois en rotation et coulissante axialement,
- la garniture de frein (14) est montée de façon à pouvoir être poussée par la broche filetée (22) de l'entraînement à vis (18) contre l'organe de frein (16) ou être dégagée de l'organe de frein (16), et l'installation de blocage en rotation (46) maintient bloquée en rotation la broche filetée (22) lors du serrage et du desserrage de la garniture de frein (14) par un moteur électrique de façon que celle-ci ne puisse que coulisser axialement et en cas de défaut avec impossibilité de desserrer de la garniture de frein (14) par le moteur électrique, elle autorise la rotation et le coulissement axial de la broche filetée (22).

2. Dispositif de frein de roue électromécanique selon la revendication 1,
**caractérisé en ce que**
la broche filetée (22) est une broche creuse engagée sur une broche (50) à laquelle elle est reliée solidairement en rotation par une liaison par la forme (54, 56) et peut coulisser axialement, la broche (50) étant solidaire en rotation de l'installation de blocage en rotation (46).

3. Dispositif de frein de roue électromécanique selon la revendication 2,
**caractérisé en ce que**
la broche est une broche profilée (50) et la broche filetée (22) comporte un profil intérieur (56) complémentaire de la broche profilée (50).

4. Dispositif de frein de roue électromécanique selon la revendication 1,
**caractérisé par**
un palier de rotation (38) entre la partie (22) de l'entraînement à broches (12) qui pousse la garniture de frein (14) contre l'organe de frein (16) et la garniture de frein (14), ce palier permettant un mouvement de rotation entre la partie (22) de l'entraînement à broches (18) qui presse la garniture de frein (14) contre l'organe de frein (16), et la garniture de frein (14), et qui transmet sur la garniture de frein (14) un mouvement de translation de la partie (22) de l'entraînement à broches (18) pressant la garniture de frein (14) contre l'organe de frein (16), en direction de la garniture de frein (14).

5. Dispositif de frein de roue électromécanique selon la revendication 4,
**caractérisé en ce que**
le palier de rotation (18) comporte une tête de palier (40) arrondie logée dans une coupelle de palier (42).

6. Dispositif de frein de roue électromécanique selon la revendication 1,
**caractérisé par**
un manchon d'étanchéité (44) prévu sur le côté de l'entraînement à broches (18) tourné vers la garniture de frein (14), pour protéger l'entraînement à broches (18) contre l'humidité et la saleté et qui maintient la garniture de frein (14) en appui contre la partie (22) de l'entraînement à broches (18) qui pousse la garniture de frein (14) contre l'organe de frein (16).

7. Dispositif de frein de roue électromécanique selon la revendication 1,
**caractérisé en ce que**
l'entraînement à broches (18) est un entraînement à galets filetés notamment à un entraînement à rouleaux filetés.

8. Dispositif de frein de roue électromécanique selon la revendication 1,
**caractérisé en ce que**
le moteur électrique (30) est un moteur à commutation électronique.

9. Dispositif de frein de roue électromécanique selon la revendication 1, comportant un circuit d'alimentation en énergie (E1) pour le moteur électrique (30),
**caractérisé en ce que**
l'embrayage électromagnétique (46) est relié à un circuit d'alimentation en énergie (E2) indépendant du circuit d'alimentation en énergie (E1) du moteur électrique (30).
